# EUROPEAN PATENT APPLICATION

(11) **EP 4 524 761 A1**
(43) Date of publication of application: **19.03.2025**
(21) Application number: 22941441.2
(22) Date of filing: 12.10.2022
(51) Int. Cl.: G06F 15/163

(54) **MULTI-CORE HETEROGENEOUS COMMUNICATION METHOD AND SYSTEM FOR INTELLIGENT DRIVING OF VEHICLE, AND STORAGE MEDIUM**

(30) Priority: 13.05.2022 CN 202210516675
(71) Applicant: Guangzhou Automobile Group Co., Ltd., Guangzhou, Guangdong 510030 (CN)
(72) Inventor: LIU, Jinyuan, Guangzhou, Guangdong 511434 (CN); MA, Yixing, Guangzhou, Guangdong 511434 (CN); YU, Fangmin, Guangzhou, Guangdong 511434 (CN); OUYANG, Wenyu, Guangzhou, Guangdong 511434 (CN); WU, Lingsheng, Guangzhou, Guangdong 511434 (CN)
(74) Representative: Zaboliene, Reda
(86) International application number: PCT/CN2022/124943
(87) International publication number: WO 2023/216503

(57) **Abstract**

A multi-core heterogeneous communication method, system, and storage medium for vehicle intelligent driving are provided, the multi-core comprising a primary core and a plurality of secondary cores, a plurality of data channels arranged among the primary core and the secondary cores, each data channel includes a plurality of circular buffers, the data channels are used to transmit data from the secondary cores to the primary core, the circular buffers are used to store the data that is being transmitted in the data channels; the secondary cores are respectively used to receive different vehicle internal data or vehicle external data, and put the vehicle internal data or the vehicle external data into the circular buffers of the data channels between the secondary cores and the primary core; an IPC-Adapter-SVC process obtains a priority of each data channel, sequentially extract the vehicle internal data or the vehicle external data from the circular buffers in each data channel according to the priority, and distributes the vehicle internal data or the vehicle external data to different intelligent processes run by the primary core through a data distribution service DDS, which realizes high efficiency and low latency of multi-core transmission.

## Description

### TECHNICAL FIELD

The present disclosure relates to intelligent driving technologies field, in particular to a multi-core heterogeneous communication method, system, and computer storage medium for vehicle intelligent driving.

### BACKGROUND

With the development of intelligent driving technology, more and more sensors are used in the intelligent driving system, and the transmission of signals is becoming more and more heavy. The platforms used for the transmission of signals and messages of various modules are often complex multi-core heterogeneous automatic driving platform, high efficiency and low latency of information cross-core transmission are particularly important.

At present, multi-core heterogeneous autonomous driving platforms usually use one main core to manage and transmit data, so when transmitting a large amount of data, the main core processing will often be in order. If each core accesses DDR (Double Data Rate SDRAM, double rate Synchronous dynamic random access memory, normally known as DDR) has no order of priority, it depends on the process on each core to seize resources, which will cause uncertainty in signal transmission delay, it is not suitable for large-scale multi-core heterogeneous intelligent driving SOC (System on Chip) platform. Therefore, it is urgent to propose a communication technology suitable for large-scale multi-core heterogeneous intelligent driving SOC platform.

### SUMMARY OF THE INVENTION

The present application solves technical problems, providing a multi-core heterogeneous communication method, a system, and a computer storage medium for vehicle intelligent driving, realizing high efficiency and low latency of multi-core transmission of information of vehicle intelligent driving, and suitable for large-scale multi-core heterogeneous intelligent driving SOC platform.

One embodiment provides a multi-core heterogeneous communication method for vehicle intelligent driving, including:
the multi-core includes a primary core and a plurality of secondary cores, a plurality of data channels are arranged among the primary core and the plurality of secondary cores, each of the plurality of data channels includes a plurality of circular buffers, the plurality of data channels are used to transmit data from the plurality of secondary cores to the primary core, the plurality of circular buffers are used to store the data that is being transmitted in the data channels;
the method includes:
   the primary core activates an IPC-Adapter-SVC process;
   the plurality of secondary cores respectively receives different vehicle internal data or vehicle external data, and puts the vehicle internal data or the vehicle external data into the plurality of circular buffers of the plurality of data channels between the plurality of secondary cores and the primary core;
   the IPC-Adapter-SVC process obtains a priority of each of the plurality of data channels, sequentially extracts the vehicle internal data or the vehicle external data from the plurality of circular buffers in each of the plurality of data channels according to the priority, and distributes the vehicle internal data or the vehicle external data to different intelligent processes run by the primary core through a data distribution service DDS.

Preferably, a memory of the vehicle stores data structures, the data structures at least include a plurality of Vring structs, the plurality of Vring structs are corresponding to the plurality of data channels one-to-one, each of the plurality of Vring structs at least includes available buffer index;

the method includes:
when any one of the plurality of secondary cores puts the vehicle internal data or the vehicle external data into the plurality of circular buffers between the any one of the plurality of secondary cores and the primary core, a value of the available buffer index of the Vring struct corresponding to the data channel is added by 1, to indicate a present working location of the any one of the plurality of secondary cores;
wherein, the IPC-Adapter-SVC process obtains the priority of each of the plurality of data channels, sequentially extracting the vehicle internal data or the vehicle external data from the plurality of circular buffers in each of the plurality of data channels according to the priority, includes:
when the IPC-Adapter-SVC process extracts the vehicle internal data or the vehicle external data from the plurality of circular buffers in any one of the plurality of data channels, the IPC-Adapter-SVC process reads the value of the available buffer index of the Vring struct corresponding to the any one of the plurality of data channels, determines a location of the circular buffer from which the data is currently to be extracted according to value of the available buffer index, and extracts the vehicle internal data or the vehicle external data from the circular buffer according to the location of the circular buffer from which the data is currently to be extracted.

Preferably, each of the plurality of data channels includes N circular buffers, N is greater than 0;
the method includes:
when the value of the available buffer index of any one of the Vring structs is added by 1, if the value of the available buffer index of any one of Vring structs is equal to N, setting the value of the available buffer index of any one of Vring structs as 1.

Preferably, the multi-core heterogeneous communication method further includes:
When any one of the plurality of secondary cores puts the vehicle internal data or the vehicle external data into the plurality of circular buffers of the data channel between the any one of the plurality of secondary cores and the primary core, reading the value of the available buffer index of the Vring struct corresponding to the any one of the data channel, determining a location of the circular buffer where the data is currently to be stored according to the value of the available buffer index, and storing the vehicle internal data or vehicle external data to be transmitted into corresponding circular buffer according to the location of the circular buffer where the data is currently to be stored.

Preferably, a memory of the vehicle stores a plurality of ShmloVirtio structs, the plurality of ShmloVirtio structs are corresponding to the plurality of data channels one-to-one, each of the plurality of ShmloVirtio structs stores a priority of the corresponding data channel and a quantity and a capacity of the plurality of circular buffers;
the method includes:
before the primary core activating the IPC-Adapter-SVC process, initializing an IPC channel, configuring the priority of each of the plurality of data channels and the quantity and the capacity of the plurality of circular buffers.

Preferably, a plurality of data channels are arranged among the plurality of secondary cores, each of the plurality of data channels includes a plurality of circular buffers, the plurality of data channels are used to transmit data from one of the plurality of secondary cores to another one of the plurality of secondary cores, the plurality of circular buffers are used to store the data transmitted in the data channels, the plurality of secondary cores at least include a first secondary core and a second secondary core;
the method includes:
the first secondary core receives the vehicle internal data or the vehicle external data, and puts the vehicle internal data or the vehicle external data into the plurality of circular buffers in the data channel between the first secondary core and the second secondary core;
the second secondary core obtains a priority of each of the plurality of data channels, and sequentially extracts the vehicle internal data or the vehicle external data from the plurality of circular buffers in each of the plurality of data channels according to the priority.

Preferably, the plurality of secondary cores at least include a core used for system expansion.

The present application further provides a multi-core heterogeneous communication system for vehicle intelligent driving includes a primary core and a plurality of secondary cores, a plurality of data channels is arranged among the primary core and the plurality of secondary cores, each of the plurality of data channels includes a plurality of circular buffers, the plurality of data channels is used to transmit data from the plurality of secondary cores to the primary core, the plurality of circular buffers is used to store the data that is being transmitted in the data channels;
the primary core is used to activate an IPC-Adapter-SVC process;
the plurality of secondary cores is respectively used to receive different vehicle internal data or vehicle external data, and put the vehicle internal data or the vehicle external data into the plurality of circular buffers of the plurality of data channels between the plurality of secondary cores and the primary core;
the IPC-Adapter-SVC process is used to obtain a priority of each of the plurality of data channels, sequentially extract the vehicle internal data or the vehicle external data from the plurality of circular buffers in each of the plurality of data channels according to the priority, and distribute the vehicle internal data or the vehicle external data to different intelligent processes run by the primary core through a data distribution service DDS.

Preferably, a memory of the vehicle stores data structures, the data structures at least include a plurality of Vring structs, the plurality of Vring structs are corresponding to the plurality of data channels one-to-one, each of the plurality of Vring structs at least includes available buffer index;
wherein, when any one of the plurality of secondary cores puts the vehicle internal data or the vehicle external data into the plurality of circular buffers between the any one of the plurality of secondary cores and the primary core, a value of the available buffer index of the Vring struct corresponding to the data channel is added by 1, to indicate a present working location of the any one of the plurality of secondary cores;
wherein, the IPC-Adapter-SVC process obtaining the priority of each of the plurality of data channels, sequentially extracting the vehicle internal data or the vehicle external data from the plurality of circular buffers in each of the plurality of data channels according to the priority, includes:
   the IPC-Adapter-SVC process is used to, when extracting the vehicle internal data or the vehicle external data from the plurality of circular buffers in any one of the plurality of data channels, read the value of the available buffer index of the Vring struct corresponding to the any one of the plurality of data channels, determine a location of the circular buffer from which the data is currently to be extracted according to value of the available buffer index, and extract the vehicle internal data or the vehicle external data from the circular buffer according to the location of the circular buffer from which the data is currently to be extracted.

Preferably, each of the plurality of data channels includes N circular buffers, N is greater than 0;
when the value of the available buffer index of any one of the Vring structs is added by 1, if the value of the available buffer index of any one of Vring structs is equal to N, setting the value of the available buffer index of any one of Vring structs as 1.

Preferably, a memory of the vehicle stores a plurality of ShmloVirtio structs, the plurality of ShmloVirtio structs are corresponding to the plurality of data channels one-to-one, each of the plurality of ShmloVirtio structs stores a priority of the corresponding data channel and a quantity and a capacity of the plurality of circular buffers;
before the primary core activating the IPC-Adapter-SVC process, initializing an IPC channel, configuring the priority of each of the plurality of data channels and the quantity and the capacity of the plurality of circular buffers.

Preferably, a plurality of data channels are arranged among the plurality of secondary cores, each of the plurality of data channels includes a plurality of circular buffers, the plurality of data channels are used to transmit data from one of the plurality of secondary cores to another one of the plurality of secondary cores, the plurality of circular buffers are used to store the data transmitted in the data channels, the plurality of secondary cores at least include a first secondary core and a second secondary core;
the first secondary core is used to receive the vehicle internal data or the vehicle external data, and put the vehicle internal data or the vehicle external data into the plurality of circular buffers in the data channel between the first secondary core and the second secondary core;
the second secondary core is used to obtain a priority of each of the plurality of data channels, and sequentially extract the vehicle internal data or the vehicle external data from the plurality of circular buffers in each of the plurality of data channels according to the priority.

The present application further provides a computer readable storage medium storing computer programs, the computer programs used to, executed by a processor, perform the multi-core heterogeneous communication method for vehicle intelligent driving.

Each embodiment of the present application has at least the following beneficial effects:
The data channels among the primary core and the secondary cores are arranged with the priority, the primary core arranges the IPC-Adapter-SVC process, the IPC-Adapter-SVC process obtains the priority of each of the plurality of data channels, sequentially extracts the vehicle internal data or the vehicle external data from the plurality of circular buffers in each of the plurality of data channels according to the priority, and distributes the vehicle internal data or the vehicle external data to different intelligent processes run by the primary core through a data distribution service DDS. In the embodiments of the present application, the priority of the data channels among each of the cores may be set by the cores, ensuring that different signals can be prioritized according to the level of real-time requirements, through debugging, a reasonable priority order can be found to meet the real-time requirements of different signals in intelligent driving applications, and realizing low latency of multi-core transmission of the information of vehicle intelligent driving. Additionally, currently relevant existing communication methods only use one communication method, such as a single DDS communication or a single multi-core communication method, the embodiments of the present application combine IPC multi-core communication technology and data distribution service DDS technology, which may realize the high efficiency of multi-core transmission of vehicle intelligent driving information, and is suitable for use on large-scale multi-core heterogeneous intelligent driving SOC platforms.

Other features and advantages of embodiments of the present application will be set forth in the ensuing description.

### BRIEF DESCRIPTION OF THE DRAWINGS

In order to more clearly illustrate the technical solutions in the embodiments of the present application or the prior art, the following will briefly introduce the drawings that need to be used in the description of the embodiments or the prior art. Obviously, the accompanying drawings in the following description are only some embodiments of the present application, those skilled in the art can also obtain other drawings based on these drawings without creative work.
FIG. 1 is a flow chart of an embodiment of the present application of a multi-core heterogeneous communication method for vehicle intelligent driving.
FIG. 2 is a schematic diagram of an embodiment of the present application of a ICP+DDS model.
FIG. 3 is a schematic diagram of an embodiment of the present application of all data channels of the multi-core heterogeneous communication are tiled in a memory.
FIG. 4 is a schematic diagram of an embodiment of the present application of a vqBaseAddr struct.
FIG. 5 is a schematic diagram of an embodiment of the present application of a VringBaseAddr struct.
FIG. 6 is a schematic diagram of an embodiment of the present application of a PrimeBaseAddr struct.
FIG. 7 is a schematic diagram of an embodiment of the present application of a Vring struct.

### DETAILED DESCRIPTION

Various exemplary embodiments, features, and aspects of the present application will be described in detail below with reference to the accompanying drawings. In addition, in order to better illustrate the present application, numerous specific details are given in the following specific examples. It will be understood by those skilled in the art that the present application may be practiced without certain of the specific details. In some embodiments, means known to those skilled in the art are not described in detail in order to highlight the gist of the present application.

An embodiment of the present application provides a multi-core heterogeneous communication method for vehicle intelligent driving, the multi-core includes a primary core and a plurality of secondary cores, a plurality of data channels are arranged among the primary core and the plurality of secondary cores, each of the plurality of data channels includes a plurality of circular buffers, the plurality of data channels are used to transmit data from the plurality of secondary cores to the primary core, the plurality of circular buffers are used to store the data transmitted in the data channels.

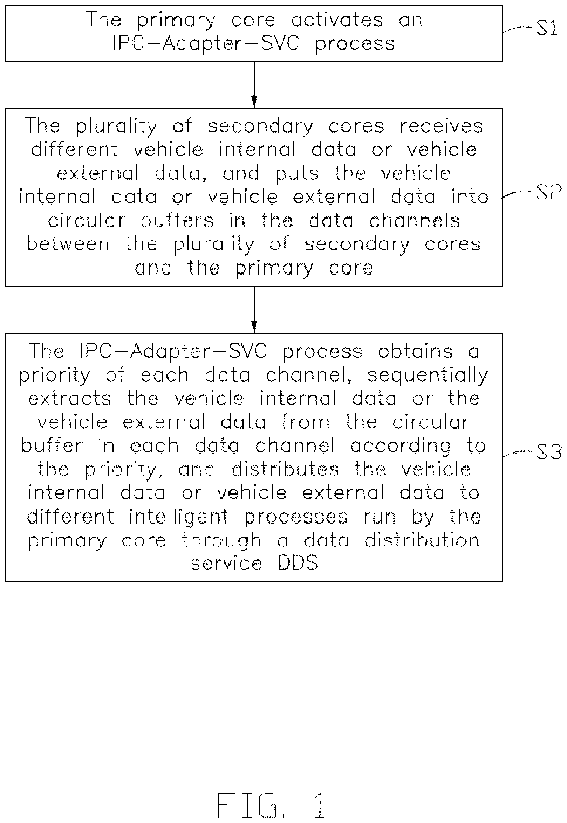

Referring to FIG. 1, the method of the present embodiment includes following:
At block S1, the primary core activates an IPC-Adapter-SVC process.

At block S2, the plurality of secondary cores receives different vehicle internal data or vehicle external data, and puts the vehicle internal data or vehicle external data into circular buffers in the data channels between the plurality of secondary cores and the primary core.

In detail, the different vehicle internal data means CAN IMU data, etc., the vehicle external data means camera data, ultrasonic (USS) data, etc., that is data used in the intelligent driving decision process.

At block S3, the IPC-Adapter-SVC process obtains a priority of each data channel, sequentially extracts the vehicle internal data or the vehicle external data from the circular buffer in each data channel according to the priority, and distributes the vehicle internal data or the vehicle external data to different intelligent processes run by the primary core through a data distribution service DDS.

In the present embodiment, setting the priority to the data channels between the primary core and the plurality of secondary cores, the primary core sets the IPC-Adapter-SVC process, the IPC-Adapter-SVC process obtains the priority of each data channel, extracts the vehicle internal data or vehicle external data from the circular buffer in each data channel according to the priority sequence, and distributes the vehicle internal data or vehicle external data to different intelligent processes run by the primary core through the data distribution service DDS. In the embodiments of the present application, the priority of the data channel of each core can be set independently, so as to ensure different signals can be sequenced relative to the priority of the data channel according to actual requirements, determining a reasonable priority sequence through system testing, to meet the actual requirements of the different signals in the intelligent driving application, realizing low delay of information multi-core transmission in vehicle intelligent driving. Additionally, the present communication method uses one communication way, such as a single DDS (data distribution service) communication or a single communication way in multi-core, however, the embodiments of the present application combines the IPC multi-core communication technologies and the data distribution service DDS technologies, which may realize a high efficiency of information multi-core transmission in vehicle intelligent driving, and suitable for large-scale multi-core heterogeneous intelligent driving SOC platform.

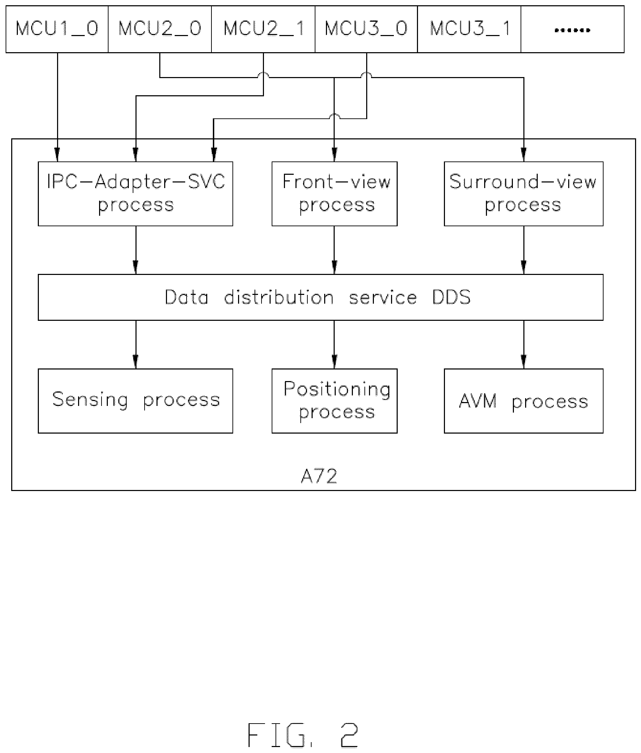

In order to set forth the principle of the embodiment of the present application for convenience, the embodiment of the present application is understood more easily, enumerate a kind of specific example and carry out specific explanation, a IPC+DDS model of this specific example is as shown in FIG. 2, FIG. 2 shows an application situation of six cores, the present application is not limited to the IPC+DDS model of FIG. 2, the six cores include a primary core A72 and five secondary cores MCU1_0, MCU2_0, MCU2_1, MCU3_1, MCU3_0. The secondary cores MCU1_0, MCU2_0, MCU2_1, MCU3_1, MCU3_0 can be known as satellite cores of the primary core A72, which can install with Autosar system, RTOS system, etc. In a specific scene of the vehicle intelligent driving (such as automatic driving, automatic parking, etc.), function of each core can be distributed as following ways, the secondary core MCU1_0 is responsible for distributing CAN IMU data, the secondary core MCU2_0 is responsible for capturing camera data and distributing to the primary core A72, the secondary core MCU2_1 is responsible for capturing ultrasonic (USS) data and distributing to the primary core A72, the secondary core MCU3_0 is responsible for control algorithm, status manage outputting some signals to interact with the primary core A72, an input of the secondary core MCU3_0 is way point information of the primary core A72, in addition, the secondary core MCU3_1 is a reserved core used for system expansion, the primary core A72 is used to other algorithm of the intelligent driving decision such as automatic parking, such as perception process, positioning process, and AVM (Around View Monitor) process, needing data of the satellite cores. The above is just an example, and in practical applications, a specific quantity of the secondary cores and the function of each secondary core can be adjusted appropriately.

For instance, the primary core A72 receives CAN IMU USS control algorithm multi-core communication through the IPC+DDS model, configures the priority of the circular assesses memory DDR in a Shmlo Vitro struct. For example, the CAN signal outputted from the secondary core MCU1_0 has the highest priority, key signals like speed need highest priority, that is the data channel between the secondary core MCU1_0 and the primary core A72 has the highest priority. The priority arrangement may ensure the priority of each data channel accessing the DDR being reasonably sequenced, ensure the real-time of the signals. In addition, the camera includes a front-view and surround-view distributing service, that is configuring by this way and intensively distributing to the primary core A72 for being used by intelligent driving process, since a high requirement of a real-time of the data of the front-view and surround-view distributing service, and a great data quantity, thus, in the present embodiment, preferably setting the front-view process and the surround-view process in the primary core A72, used to directly receive front-view images and surround-view images from the camera, and distribute the data to the intelligent driving process through the data distribution service DDS, as shown in FIG. 2, the intelligent driving process may be sensing, positioning, AVM, etc. Expect the camera data, other vehicle internal/external data may be transmitted through the IPC-Adapter-SVC process. Data of all the signals may be transmitted through the data distribution service DDS, ensuring each algorithm of the primary core A72 may subscribe and use the data according to needed. In detail, in the present embodiment, different algorithm nodes may subscribe and use the same data, for example, the CAN signal may be greatly subscribed, the image data of the camera may be subscribed by the sensing module and the AVM module, IMU (Inertial Measurement Unit) data of the CAN bus may be subscribed by the positioning module.

Preferably, the memory of the vehicle may store data structure. In detail, the data structure may be a way of the computer storing and organizing data. The memory of the present embodiment may be but not limited to DDR, the data structure at least includes serval Vring structs. The serval Vring structs are corresponding to the plurality of data channels. For example, when there are 30 data channels, there are 30 Vring structs correspondingly, the Vring struct at least includes an available buffer index.

In the present embodiment, the method further includes:
At block S4, when one of the secondary core puts the vehicle internal data or the vehicle external data into the circular buffer of the data channel between the secondary core and the primary core, a value of the available buffer index of the Vring struct corresponding to the data channel pluses 1, to indicate a present working location of the secondary core.

In the present embodiment, in block S3, the IPC-Adapter-SVC process obtains the priority of each data channel, and sequentially extracts the vehicle internal data or the vehicle external data from the circular buffer in each data channel according to the priority, includes:
When the IPC-Adapter-SVC process extracts the vehicle internal data or the vehicle external data from the circular buffer in any one of the data channels, the IPC-Adapter-SVC process reads the value of the value of the available buffer index of the Vring struct corresponding to the any one of the data channels, determines a location of the available buffer index from which the data is currently to be extracted according to the value of the available buffer index, and extracts the vehicle internal data or the vehicle external data from the corresponding circular buffer according to the location of the available buffer index from which the data is currently to be extracted.

Preferably, there are data channels among the plurality of secondary cores, each of the data channels includes a plurality of the circular buffers. The data channel is used to transmit data from one secondary core to another secondary core, the circular buffer is used to store the data being transmitted in the data channel.

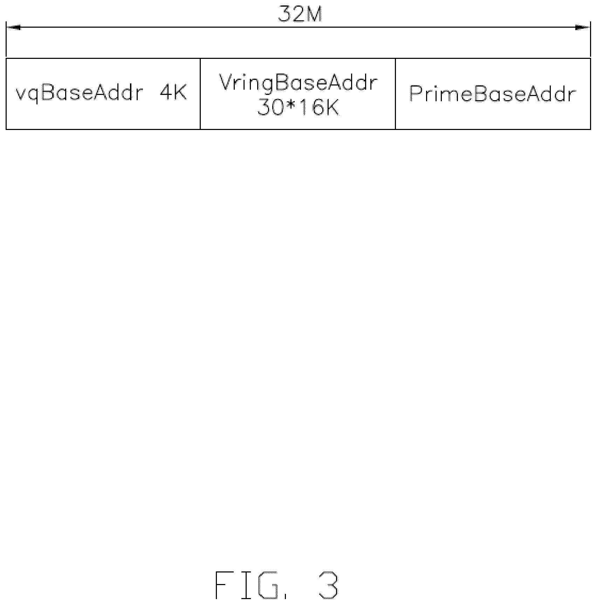

In detail, in the present embodiment, the IPC+DDS model as shown in FIG. 2, six cores take part in the IPC communication, each of the cores needs to take part in other multi-core communication. In the present embodiment, there are two data channels, RX (receive) and TX (transport), between every two cores, used to execute two-way data transmission. There are thirty data channels among the six cores, each core needs to take part in ten-core communication, the thirty data channels are tiled in the memory may be shown in FIG. 3, including vqBaseAddr strut, VringBaseAddr strut, and PrimeBaseAddr strut.

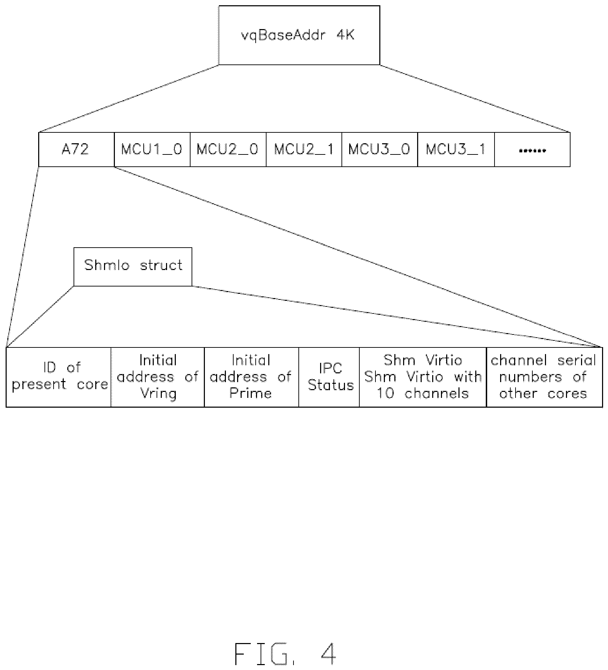

In the present embodiment, the vqBaseAddr strut is an initial address divided to a 32M memory of the IPC, the value may be assigned in an Operating System (OS), a 4K memory Shmlo struct may be assigned in the DDR memory, the 4K memory model is shown as FIG. 4, each core includes a corresponding Shmlo struct, FIG. 4 illustrates the Shmlo struct corresponding to the primary core A72, which is same with Shmlo structs corresponding to other secondary cores, not repeat shown in FIG. 4.

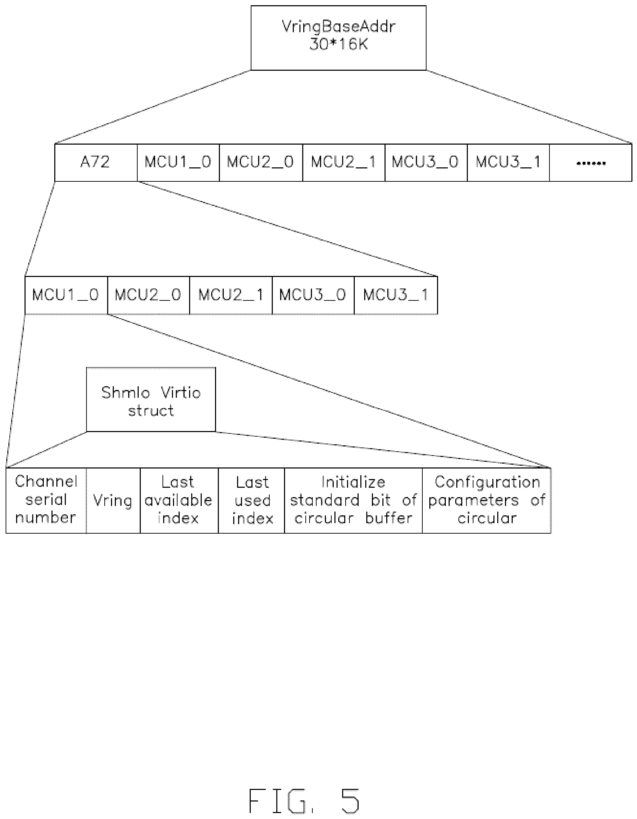

In the present embodiment, FIG. 5 illustrates a model of the vqBaseAddr strut, used to store the ShmVirtio strut with thirty data channels, each of the data channels includes a corresponding ShmVirtio strut. The ShmVirtio strut is used to manage the circular buffer in the data channel, the ShmVirtio strut includes a channel serial number of the data channel, the Vring strut, configuration parameters, including size, priority, quantity, etc., of the circular buffer. The ShmVirtio strut can be adjusted according to technical requirements and configured with desired parameters, not limited by the embodiment as shown in FIG. 5.

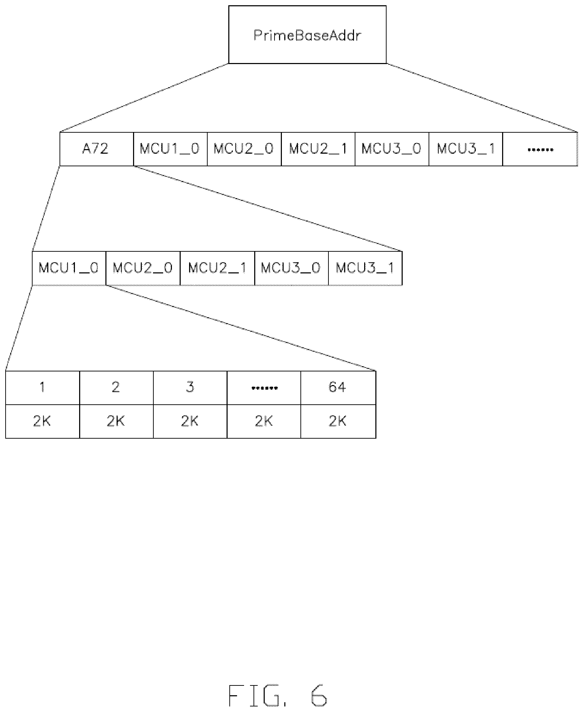

In the present embodiment, the PrimeBaseAddr is used to store the data of transmission. In one embodiment, configuring each data channel with sixty-four 2K circular buffers, a model of which is shown in FIG. 6, FIG. 6 illustrates the sixty-four 2K circular buffers of the data channel between the primary core A72 and the secondary core MCU1_0, the circular buffers of other data channels are configured the same with and referred to the circular buffers of the data channel between the primary core A72 and the secondary core MCU1_0.

It should be stated that, the data transmission between cores may execute data read and write through the three models as shown in FIGS, 4, 5, and 6, each core may execute data read and write according to the priority in the ShmVirtio struct of corresponding data channel serial number, the priority of the data transmission of corresponding data channel can be adjusted.

Preferably, each data channel includes N number of circular buffer, N is greater than 0, in the model shown in FIG. 6, N=64.

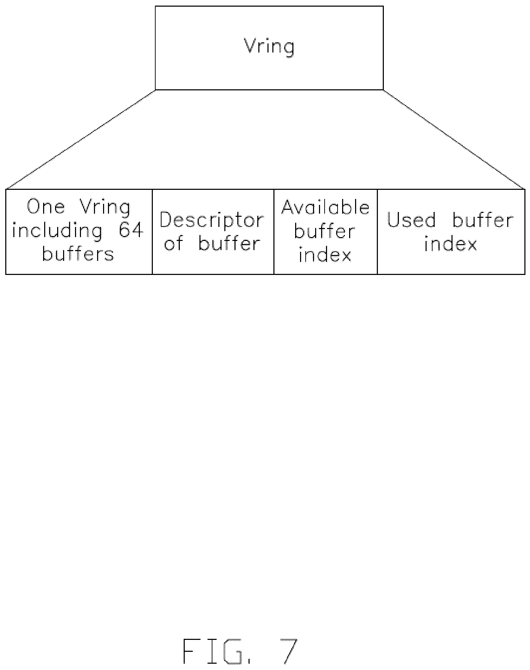

In detail, FIG. 7 illustrates an embodiment of the present application of the Vring struct, in the embodiment, the Vring struct includes quantiry of buffer, descriptor of buffer, available buffer index and used buffer index. FIG. 7 illustrates one Vring struct includes sixty-four buffers, the available buffer index indicates that the transmitter of the data transmission may use the buffer location, the used buffer index indicates that the receiver of the data transmission has extracted the buffer location, convenient for the receiver extracting data of a next buffer.

In detail, in the sixty-four buffers of each data channel, for instance, when MCU3_0 writes a frame of data to corresponding loop, the MCU3_0 may plus 1 to the available buffer index idx, to show working in the location of the available buffer index, and notice the data receiver Host that a beginning of the available buffer. The available buffer index is a maintain of the data transmitter Guest, providing data for the data receiver Host. When the Host extracts buffer from the Vring struct according to information provided by the available buffer index, the Host updates the used buffer index after processed the buffer, every time extracting the buffer, adding 1 to the idx of the used buffer index, to show working in an exact location of the used buffer index. Parameters like sixty-four and 2K can be configured according to requirements to meet the requirement of system expansion, for instance, adding a driving function based on a parking system, the amount of data may increase to adjust the quantity of the buffers.

It should be stated that, parameters like the quantity of sixty-four and size of 2K can be configured according to requirements to meet the requirement of system expansion, for instance, adding the driving function based on the parking system, the amount of data may increase to adjust the quantity of the buffers.

Furthermore, the method of the present embodiment further includes:
At block S5, when the value (that is idx of available buffer as shown in FIG. 7) of the available buffer index of any one of Vring structs is added by 1, if the value of the available buffer index of any one of Vring structs is equal to N, then setting the value of the available buffer index of any one of Vring structs as 1, indicating a specific location of the buffer presently working in.

At block S6, when any one of the secondary cores puts the vehicle internal data or vehicle external data into the circular buffer in the data channel between the secondary core and the primary core, reading the value of the available buffer index of the Vring struct corresponding to the any one of the secondary cores, determining the location of the circular buffer where the data is currently to be stored according to the value of the available buffer index, and storing the vehicle internal data or vehicle external data to be transmitted into corresponding circular buffer according to the location of the circular buffer where the data is currently to be stored.

At block S7, before executing the block of the primary core activates the IPC-Adapter-SVC process, initializing the IPC channel, configuring the priority of each data channel and the quantity and the capacity of the circular buffer.

In one embodiment, the plurality of secondary cores at least includes a first secondary core and a second secondary core.

Furthermore, the method of the present embodiment further includes:
At block S8, the first secondary core receives the vehicle internal data or the vehicle external data, and puts the vehicle internal data or the vehicle external data into the circular buffer in the data channel between the first secondary core and the second secondary core.

At block S9, the second secondary core obtains the priority of each data channel, and sequentially extracts the vehicle internal data or vehicle external data from the circular buffers in each data channel according to the priority.

Preferably, the plurality of secondary cores at least includes a core used for system expansion, such as the secondary core MCU3_1 shown in FIG. 2, meaning the system can be expanded, when a new expanded core needs communication, the new expanded core may communicate with other cores by configuring communication parameters.

It should be known that, through the method of the present application, a closed loop is formed for the communication of the entire multi-core heterogeneous platform, the primary core A72 and the several satellite cores may execute IPC+DDS communication, ensuring the communication of each automatic parking module being low latency through configuring parameters, and ensuring the system running with high efficiency.

In order to make the embodiments of the present application easier to understand, a specific application example is listed below for supplementary explanation.

For instance, a positioning module of a parking algorithm needs wheel-speed information BCS_FLWheelSpd of a left front wheel, initializing the IPC channel, a value of the IPC status in the Shmlo struct is 1, representing enabled, the signal of BCS_FLWheelSpd may obtain CAN bus signals of BCS_FLWheelSpd by the secondary core MCU1, and put the CAN bus signals in the Idt-Can-Signal-Rx-Route-Fast struct. If a serial number ID of the secondary core MCU1_0 is 1, a serial number ID of the data channel corresponding to the primary core A72 that the CAN bus signal transmitted to is 0, the secondary core MCU1_0 write the BCS_FLWheelSpd data, that is Idt-Can-Signal-Rx-Route-Fast, to the data channel with the serial number ID of 0. The ShmVirtio struct of ten channels in the Shmlo struct represent the communication of one core and other five cores, each communication includes two channels, RX and TX. In detail, the ShmVirtio struct may set parameters of the channel transmission data, such as priority, since the wheel-speed signal is an important signal, which may be set with a higher priority. Each data channel includes sixty-four circular buffers, a size of each buffer is 2K, referring to FIG. 6, each data structure to be transmitted (such as Idt-Can-Signal-Rx-Route-Fast struct) may represent a buffer, MCU1_0 puts the buffer including BCS_FLWheelSpd signal into the memory DDR, at this time the value of the available buffer index added by 1, to show working in the location of the available buffer index, noticing the Host that the beginning of the available buffer. MCU1_0 keeps putting data to the channel when the program is running, so the value of the available buffer index keeps increasing.

The IpcAdapterSVC process of the primary core A72 may extract buffer from VRing according to information provided by the available buffer index and continuously extract Idt-Can-Signal-Rx-Route-Fast struct from the buffer through the channel 0, update the used buffer index and add 1 to the value after processing, to show the location working in, the used buffer index is maintained by the data receiver Host (that is the primary core A72 in this embodiment), for being used by the data transmitter Guest (that is the MCU1_0 in this embodiment). When idx is equal to 64, a pointer may anew point to a firs circular buffer. The IpcAdapterSVC process may forward the BCS_FLWheelSpd signal through the DDS, the algorithm process of the primary core A72, such as a positioning algorithm and a mapping algorithm, may subscribe. By this process, ensuring the signals may be high effectively transmitted among multi-core, and be subscribed by different nodes.

Corresponding to the method of the above-mentioned embodiment, another embodiment of the present application also provides a multi-core heterogeneous communication system for vehicle intelligent driving, which can be used to implement the method described in the above-mentioned embodiment. Referring to FIG. 2, the system of the present embodiment includes a primary core and a plurality of secondary cores, a plurality of data channels are arranged among the primary core and the plurality of secondary cores, each of the plurality of data channels includes a plurality of circular buffers, the plurality of data channels are used to transmit data from the plurality of secondary cores to the primary core, the plurality of circular buffers are used to store the data transmitted in the data channels;
the primary core is used to activate an IPC-Adapter-SVC process;
the plurality of secondary cores are respectively used to receive different vehicle internal data or vehicle external data, and put the vehicle internal data or the vehicle external data into the plurality of circular buffers of the plurality of data channels between the plurality of secondary cores and the primary core;
the IPC-Adapter-SVC process is used to obtain a priority of each of the plurality of data channels, sequentially extract the vehicle internal data or the vehicle external data from the plurality of circular buffers in each of the plurality of data channels according to the priority, and distribute the vehicle internal data or the vehicle external data to different intelligent processes run by the primary core through a data distribution service DDS.

Preferably, a memory of the vehicle stores data structures, the data structures at least include a plurality of Vring structs, the plurality of Vring structs are corresponding to the plurality of data channels, each of the plurality of Vring structs includes available buffer index;
wherein, when any one of the plurality of secondary cores puts the vehicle internal data or the vehicle external data into the plurality of circular buffers between the any one of the plurality of secondary cores and the primary core, a value of the available buffer index of the Vring struct corresponding to the data channel is added by 1, to indicate a present working position of the any one of the plurality of secondary cores;
wherein, the IPC-Adapter-SVC process obtaining the priority of each of the plurality of data channels, sequentially extracting the vehicle internal data or the vehicle external data from the plurality of circular buffers in each of the plurality of data channels according to the priority, includes:
   the IPC-Adapter-SVC process is used to, when extracting the vehicle internal data or the vehicle external data from the plurality of circular buffers in any one of the plurality of data channels, read the value of the available buffer index of the Vring struct corresponding to the any one of the plurality of data channels, determine a location of the circular buffer from which the data is currently to be extracted according to value of the available buffer index, and extract the vehicle internal data or the vehicle external data from the circular buffer according to the location of the circular buffer to be extracted data from.

Preferably, each of the plurality of data channels includes N circular buffers, N is greater than 0;
when the value of the available buffer index of any one of the Vring structs is added by 1, if the value of the available buffer index of any one of Vring structs is equal to N, setting the value of the available buffer index of any one of Vring structs as 1.

Preferably, a memory of the vehicle stores a plurality of ShmloVirtio structs, the plurality of ShmloVirtio structs are corresponding to the plurality of data channels respectively, each of the plurality of ShmloVirtio structs stores a priority of the corresponding data channel and a quantity and a capacity of the plurality of circular buffers;
before the primary core activating the IPC-Adapter-SVC process, initializing an IPC channel, configuring the priority of each of the plurality of data channels and the quantity and the capacity of the plurality of circular buffers.

Preferably, a plurality of data channels are arranged among the plurality of secondary cores, each of the plurality of data channels includes a plurality of circular buffers, the plurality of data channels are used to transmit data from one of the plurality of secondary cores to another one of the plurality of secondary cores, the plurality of circular buffers are used to store the data transmitted in the data channels, the plurality of secondary cores at least includes a first secondary core and a second secondary core;
the first secondary core is used to receive the vehicle internal data or the vehicle external data, and put the vehicle internal data or the vehicle external data into the plurality of circular buffers in the data channel between the first secondary core and the second secondary core;
the second secondary core is used to obtain a priority of each of the plurality of data channels, and sequentially extract the vehicle internal data or the vehicle external data from the plurality of circular buffers in each of the plurality of data channels according to the priority.

The system of the above-described embodiments is only illustrative, wherein the units described as separate components may or may not be physically separated, and the components shown as units may or may not be physical units, that is, they may located in one place, or can be distributed to multiple network elements. Part or all of the modules can be selected according to actual needs to realize the purpose of the solution of the system of the embodiment.

It should be noted that the system of the above-mentioned embodiment corresponds to the method of the above-mentioned embodiment, therefore, the unspecified parts of the system of the above-mentioned embodiment can be obtained by referring to the content of the method of the above-mentioned embodiment, that is, the specific steps recorded in the method of the above-mentioned embodiment The content can be understood as the functions that can be realized by the system of the above embodiment, and will not be repeated here.

Additionally, if the multi-core heterogeneous communication system for vehicle intelligent driving in the above embodiments is implemented in the form of software functional units and sold or used as an independent product, it can be stored in a computer readable storage medium.

Another embodiment of the present application further provides a computer readable storage medium storing computer programs, the computer programs are used to, executed by a processor, perform the multi-core heterogeneous communication method for vehicle intelligent driving.

In detail, the computer readable storage medium may include: any entity or device capable of carrying the computer program code, recording medium, U disk, mobile hard disk, magnetic disk, optical disk, computer memory, read-only memory (R value OM, R value ead-Only MemoR value y), random access memory (R value AM, R value andom Access MemoR value y), electrical carrier signal, telecommunication signal, and software distribution media, etc.

Having described various embodiments of the present invention, the foregoing description is exemplary, not exhaustive, and is not limited to the disclosed embodiments. Many modifications and alterations will be apparent to those of ordinary skill in the art without departing from the scope and spirit of the described embodiments. The choice of terminology used herein is intended to best explain the principle of each embodiment, practical application or technical improvement in the market, or to enable other ordinary skilled persons in the technical field to understand each embodiment disclosed herein.

## Claims

1. A multi-core heterogeneous communication method for vehicle intelligent driving, **characterized in that**, comprising:
the multi-core comprising a primary core and a plurality of secondary cores, a plurality of data channels arranged among the primary core and the plurality of secondary cores, each of the plurality of data channels comprising a plurality of circular buffers, the plurality of data channels used to transmit data from the plurality of secondary cores to the primary core, the plurality of circular buffers used to store the data that is being transmitted in the data channels;
the method comprising:
activating an IPC-Adapter-SVC process by the primary core;
respectively receiving different vehicle internal data or vehicle external data, and putting the vehicle internal data or the vehicle external data into the plurality of circular buffers of the plurality of data channels between the plurality of secondary cores and the primary core by the plurality of secondary cores;
obtaining a priority of each of the plurality of data channels, sequentially extracting the vehicle internal data or the vehicle external data from the plurality of circular buffers in each of the plurality of data channels according to the priority, and distributing the vehicle internal data or the vehicle external data to different intelligent processes run by the primary core through a data distribution service DDS, by the IPC-Adapter-SVC process.

2. The multi-core heterogeneous communication method according to claim 1, wherein a memory of the vehicle stores data structures, the data structures at least comprise a plurality of Vring structs, the plurality of Vring structs are corresponding to the plurality of data channels one-to-one, each of the plurality of Vring structs at least comprises available buffer index;
the method comprises:
when any one of the plurality of secondary cores puts the vehicle internal data or the vehicle external data into the plurality of circular buffers between the any one of the plurality of secondary cores and the primary core, a value of the available buffer index of the Vring struct corresponding to the data channel is added by 1, to indicate a present working location of the any one of the plurality of secondary cores;
obtaining the priority of each of the plurality of data channels, sequentially extracting the vehicle internal data or the vehicle external data from the plurality of circular buffers in each of the plurality of data channels according to the priority by the IPC-Adapter-SVC process, comprises:
when the IPC-Adapter-SVC process extracts the vehicle internal data or the vehicle external data from the plurality of circular buffers in any one of the plurality of data channels, the IPC-Adapter-SVC process reads the value of the available buffer index of the Vring struct corresponding to the any one of the plurality of data channels, determines a location of the circular buffer from which the data is currently to be extracted according to value of the available buffer index, and extracts the vehicle internal data or the vehicle external data from the circular buffer according to the location of the circular buffer from which the data is currently to be extracted.

3. The multi-core heterogeneous communication method according to claim 2, wherein each of the plurality of data channels comprises N circular buffers, N is greater than 0;
the method comprises:
when the value of the available buffer index of any one of the Vring structs is added by 1, if the value of the available buffer index of any one of Vring structs is equal to N, setting the value of the available buffer index of any one of Vring structs as 1.

4. The multi-core heterogeneous communication method according to claim 2, further comprising:
when any one of the plurality of secondary cores puts the vehicle internal data or the vehicle external data into the plurality of circular buffers of the data channel between the any one of the plurality of secondary cores and the primary core, reading the value of the available buffer index of the Vring struct corresponding to the any one of the data channel, determining a location of the circular buffer where the data is currently to be stored according to the value of the available buffer index, and storing the vehicle internal data or vehicle external data to be transmitted into corresponding circular buffer according to the location of the circular buffer where that data is currently to be stored.

5. The multi-core heterogeneous communication method according to claim 1, wherein a memory of the vehicle stores a plurality of ShmloVirtio structs, the plurality of ShmloVirtio structs are corresponding to the plurality of data channels one-to-one, each of the plurality of ShmloVirtio structs stores a priority of the corresponding data channel and a quantity and a capacity of the plurality of circular buffers;
the method comprises:
before the primary core activating the IPC-Adapter-SVC process, initializing an IPC channel, configuring the priority of each of the plurality of data channels and the quantity and the capacity of the plurality of circular buffers.

6. The multi-core heterogeneous communication method according to claim 1, wherein a plurality of data channels are arranged among the plurality of secondary cores, each of the plurality of data channels comprises a plurality of circular buffers, the plurality of data channels are used to transmit data from one of the plurality of secondary cores to another one of the plurality of secondary cores, the plurality of circular buffers are used to store the data transmitted in the data channels, the plurality of secondary cores at least comprise a first secondary core and a second secondary core;
the method comprises:
the first secondary core receives the vehicle internal data or the vehicle external data, and puts the vehicle internal data or the vehicle external data into the plurality of circular buffers in the data channel between the first secondary core and the second secondary core;
the second secondary core obtains a priority of each of the plurality of data channels, and sequentially extracts the vehicle internal data or the vehicle external data from the plurality of circular buffers in each of the plurality of data channels according to the priority.

7. The multi-core heterogeneous communication method according to any one of claims 1 to 6, wherein the plurality of secondary cores at least comprise a core used for system expansion.

8. A multi-core heterogeneous communication system for vehicle intelligent driving, **characterized in that**, comprising a primary core and a plurality of secondary cores, a plurality of data channels arranged among the primary core and the plurality of secondary cores, each of the plurality of data channels comprising a plurality of circular buffers, the plurality of data channels used to transmit data from the plurality of secondary cores to the primary core, the plurality of circular buffers used to store the data that is being transmitted in the data channels;
the primary core used to activate an IPC-Adapter-SVC process;
the plurality of secondary cores respectively used to receive different vehicle internal data or vehicle external data, and put the vehicle internal data or the vehicle external data into the plurality of circular buffers of the plurality of data channels between the plurality of secondary cores and the primary core;
the IPC-Adapter-SVC process used to obtain a priority of each of the plurality of data channels, sequentially extract the vehicle internal data or the vehicle external data from the plurality of circular buffers in each of the plurality of data channels according to the priority, and distribute the vehicle internal data or the vehicle external data to different intelligent processes run by the primary core through a data distribution service DDS.

9. The multi-core heterogeneous communication system according to claim 8, wherein a memory of the vehicle stores data structures, the data structures at least comprise a plurality of Vring structs, the plurality of Vring structs are corresponding to the plurality of data channels one-to-one, each of the plurality of Vring structs at least comprises available buffer index;
wherein, when any one of the plurality of secondary cores puts the vehicle internal data or the vehicle external data into the plurality of circular buffers between the any one of the plurality of secondary cores and the primary core, a value of the available buffer index of the Vring struct corresponding to the data channel is added by 1, to indicate a present working location of the any one of the plurality of secondary cores;
wherein, the IPC-Adapter-SVC process obtaining the priority of each of the plurality of data channels, sequentially extracting the vehicle internal data or the vehicle external data from the plurality of circular buffers in each of the plurality of data channels according to the priority, comprises:
the IPC-Adapter-SVC process is used to, when extracting the vehicle internal data or the vehicle external data from the plurality of circular buffers in any one of the plurality of data channels, read the value of the available buffer index of the Vring struct corresponding to the any one of the plurality of data channels, determine a location of the circular buffer from which the data is currently to be extracted according to value of the available buffer index, and extract the vehicle internal data or the vehicle external data from the circular buffer according to the location of the circular buffer from which the data is currently to be extracted.

10. The multi-core heterogeneous communication system according to claim 9, wherein each of the plurality of data channels comprises N circular buffers, N is greater than 0;
when the value of the available buffer index of any one of the Vring structs is added by 1, if the value of the available buffer index of any one of Vring structs is equal to N, setting the value of the available buffer index of any one of Vring structs as 1.

11. The multi-core heterogeneous communication system according to claim 10, wherein a memory of the vehicle stores a plurality of ShmloVirtio structs, the plurality of ShmloVirtio structs are corresponding to the plurality of data channels one-to-one, each of the plurality of ShmloVirtio structs stores a priority of the corresponding data channel and a quantity and a capacity of the plurality of circular buffers;
before the primary core activating the IPC-Adapter-SVC process, initializing an IPC channel, configuring the priority of each of the plurality of data channels and the quantity and the capacity of the plurality of circular buffers.

12. The multi-core heterogeneous communication system according to claim 8, wherein a plurality of data channels are arranged among the plurality of secondary cores, each of the plurality of data channels comprises a plurality of circular buffers, the plurality of data channels are used to transmit data from one of the plurality of secondary cores to another one of the plurality of secondary cores, the plurality of circular buffers are used to store the data transmitted in the data channels, the plurality of secondary cores at least comprise a first secondary core and a second secondary core;
the first secondary core is used to receive the vehicle internal data or the vehicle external data, and put the vehicle internal data or the vehicle external data into the plurality of circular buffers in the data channel between the first secondary core and the second secondary core;
the second secondary core is used to obtain a priority of each of the plurality of data channels, and sequentially extract the vehicle internal data or the vehicle external data from the plurality of circular buffers in each of the plurality of data channels according to the priority.

13. A computer readable storage medium storing computer programs, **characterized in that**, the computer programs used to, executed by a processor, perform the multi-core heterogeneous communication method for vehicle intelligent driving according to any one of claims 1 to 7.
